(19) Europäisches Patentamt
European Patent Office
Office européen des brevets

(11) **EP 2 111 297 B1**

(12) **FASCICULE DE BREVET EUROPEEN**

(45) Date de publication et mention de la délivrance du brevet:
**18.09.2024 Bulletin 2024/38**

(21) Numéro de dépôt: **07871818.6**

(22) Date de dépôt: **07.12.2007**

(51) Classification Internationale des Brevets (IPC):
**B01J 23/62** $^{(2006.01)}$  **B01J 27/135** $^{(2006.01)}$
**B01J 27/185** $^{(2006.01)}$  **B01J 35/30** $^{(2024.01)}$
**B01J 37/02** $^{(2006.01)}$  **C10G 35/09** $^{(2006.01)}$

(52) Classification Coopérative des Brevets (CPC):
**B01J 23/622; B01J 27/135; B01J 27/1856;
B01J 35/30; B01J 37/0205; B01J 37/0207;
B01J 37/024; C10G 35/09**

(86) Numéro de dépôt international:
**PCT/FR2007/002023**

(87) Numéro de publication internationale:
**WO 2008/087273 (24.07.2008 Gazette 2008/30)**

(54) **CATALYSEUR BIMETALLIQUE OU MULTI-METALLIQUE PRESENTANT UN INDICE DE BIMETALLICITE ET UNE CAPACITE D'ADSORPTION D'HYDROGENE OPTIMISES**

BIMETALLISCHER ODER POLYMETALLISCHER KATALYSATOR MIT OPTIMIERTEM BIMETALLIZITÄTSINDEX UND WASSERSTOFFADSORPTIONSKAPAZITÄT

BIMETALLIC OR MULTI-METALLIC CATALYST HAVING OPTIMISED BIMETALLICITY INDEX AND HYDROGEN ADSORPTION CAPACITY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611407**

(43) Date de publication de la demande:
**28.10.2009 Bulletin 2009/44**

(73) Titulaire: **IFP Energies nouvelles
92500 Rueil-Malmaison (FR)**

(72) Inventeurs:
• **LE GOFF, Pierre-Yves**
 **75011 Paris (FR)**
• **LE PELTIER, Fabienne**
 **92500 Rueil Malmaison (FR)**
• **GIRAUD, Jean**
 **38340 Salindres (FR)**
• **LACOMBE, Sylvie**
 **69390 Vernaison (FR)**
• **CHAU, Christophe**
 **69360 Communay (FR)**

(74) Mandataire: **IFP Energies nouvelles
Département Propriété Industrielle
Rond Point de l'échangeur de Solaize
BP3
69360 Solaize (FR)**

(56) Documents cités:
**EP-A1- 0 183 861     EP-A1- 0 183 861
FR-A5- 2 091 114     FR-A5- 2 091 114
US-B1- 6 624 116     US-B1- 6 624 116**

• **F. M. DAUTZENBERG, J. N. HELLE, P. BILOEN, W. M. H. SACHTLER: "Conversion of n-Hexane over Monofunctional Catalysts Supported and Unsupported PtSn Catalysts", JOURNAL OF CATALYSIS, vol. 63, 1980, pages 119 - 128, XP002453397**
• **ÀKOS FÜRCHT, ANTAL TUNGLER, SÀNDOR SZABO, ANTAL SARKANY: "n-Octane reforming over modified catalysts I. The role of Sn, Te and Bi under industrial conditions", APPLIED CATALYSIS A: GENERAL, vol. 226, 2002, pages 155 - 161, XP002453398**

- **F. M. DAUTZENBERG, J. N. HELLE, P. BILOEN, W. M. H. SACHTLER: "Conversion of n-Hexane over Monofunctional Catalysts Supported and Unsupported PtSn Catalysts", JOURNAL OF CATALYSIS, vol. 63, 1980, pages 119 - 128, XP002453397**
- **ÀKOS FÜRCHT, ANTAL TUNGLER, SÀNDOR SZABO, ANTAL SARKANY: "n-Octane reforming over modified catalysts I. The role of Sn, Te and Bi under industrial conditions", APPLIED CATALYSIS A: GENERAL, vol. 226, 2002, pages 155 - 161, XP002453398**

**Description**

**DOMAINE DE L'INVENTION**

La présente invention concerne le domaine de la conversion des hydrocarbures et plus spécifiquement du reformage de charges hydrocarbonées en présence d'un catalyseur pour produire des coupes essences. L'invention concerne également des formulations catalytiques améliorées à base d'un métal du groupe du platine utilisables pour cette conversion, ainsi que leur mode de préparation.

**ART ANTERIEUR**

De nombreux brevets décrivent l'addition de promoteur à des catalyseurs à base de platine afin d'améliorer leur performance en reformage de charges hydrocarbonée. Ainsi le brevet US 2,814,599 décrit l'addition de promoteurs tels que le gallium, l'indium, le scandium, l'yttrium, le lanthane, le thallium ou l'actinium, à des catalyseurs à base de platine ou de palladium.
Le brevet US 4,522,935 décrit des catalyseurs de reformage comprenant du platine, de l'étain, de l'indium et un composé halogéné déposés sur un support dans lesquels le rapport atomique indium/platine est supérieur à 1,14.
Les brevets US 4,964,975, US 6,600,082 B2 et US 6,605,566 B2 décrivent des catalyseurs à base de platine et d'étain utilisables dans des procédés de reformage ou de déshydrogénation.
Le brevet FR 2 840 548 décrit un catalyseur sous forme d'un lit homogène de particules comprenant une matrice amorphe, au moins un métal noble, au moins un halogène et au moins un métal additionnel. Ce métal additionnel est préférentiellement choisi dans le groupe constitué par l'étain, le germanium, le plomb, le gallium, l'indium,le thallium, le rhénium, le manganèse, le chrome, le molybdène et le tungstène.
Le brevet FR2091114 décrit un catalyseur comprenant un métal du groupe VIII, notamment le platine, au moins un promoteur X1 sélectionné dans le groupe constitué par l'étain et le germanium, un composé halogène, et un support poreux. La publication F.M. Dautzenberg et al. (« Conversion of n-hexane over Monofunctional Catalysis Supported and Unsupported PtSn Catalysis », Journal of Catalysys, vol 63, 1980, pages 119-128) décrit des catalyseurs en alumine imprégné avec de l'étain et/ou du platine, mais dépourvus d'halogène.
La publication AKOS FURCHT et al. (« n-Octane reforming over modified catalysis I. The rôle of Sn, Te and Bi under industrial conditions", Applied Catalysis A : General, vol 226, 2002, pages 155-161) décrit des catalyseurs à base d'alumine, et comprenant de l'étain et du platine. Il se concentre sur les effets respectifs de Sn, Te et Bi sur les propriétés du catalyseur.
Le brevet EP0183861 décrit un catalyseur comprenant la combinaison des métaux suivants: un métal du groupe du platine, de l'étain, de l'indium et un métal alcalin ou un métal alcalino-terreux. Il envisage l'ajout optionnel d'halogène.

**RESUME DE L'INVENTION**

La présente invention concerne le domaine des catalyseurs bimétalliques ou multi métalliques à base d'un métal noble utilisables dans un procédé de reformage catalytique.
L'invention est définie dans les revendications 1 ,16 et 22 et leur revendications dépendantes.
L'invention concerne un catalyseur comprenant un métal M du groupe du platine, au moins un promoteur X1 sélectionné dans le groupe constitué par l'étain, le germanium et le plomb, et éventuellement au moins un promoteur X2 sélectionné dans le groupe constitué par le gallium, l'indium, et le thallium, un composé halogéné et un support poreux, dans lequel le rapport atomique X1/M, et éventuellement X2/M est compris entre 0,3 et 8, le rapport $H_{ir}/M$ mesuré par adsorption d'hydrogène est supérieur à 0,40 et l'indice IBM de bimétallicité mesuré par titrage hydrogène/oxygène est supérieur à 108.
Nous avons en effet découvert que les catalyseurs ainsi définis conduisent à des performances catalytiques améliorées. L'invention concerne également la méthode de préparation de ce catalyseur et le procédé de reformage catalytique en présence de ces catalyseurs.

**DESCRIPTION DETAILLEE DE L'INVENTION**

La présente invention concerne un catalyseur comprenant un métal M du groupe du platine, au moins un promoteur X1 sélectionné dans le groupe constitué par l'étain, le germanium et le plomb, un composé halogéné et un support poreux, dans lequel le rapport atomique X1/M est compris entre 0,3 et 8.
De préférence le rapport X1/M est compris entre 0,7 et 5, de manière plus préférée entre 0,8 et 4, de manière encore plus préférée entre 1,0 et 3,0 et de manière très préférée entre 1,0 et 2,9, voire entre 1,2 et 2,6.
Le catalyseur selon l'invention peut en outre éventuellement comprendre au moins un promoteur X2 sélectionné dans le groupe constitué par le gallium, l'indium et le thallium. De préférence le rapport X2/M est alors compris entre 0,5 et 6, de manière plus préféré ledit rapport est compris entre 0,8 et 5, de manière encore plus préférée ledit rapport est compris entre 0,9 et 4 et manière très préférée entre 1,1 et 4, voire entre 1,1 et 3,5.

Le catalyseur selon l'invention contient préférentiellement 0,01 à 5 %poids de métal M du groupe du platine, de manière plus préférée 0,01 à 2 %poids de métal M et de manière encore plus préférée 0,1 à 1 %poids de métal M. De préférence le métal M est le platine ou le palladium et de manière très préférée le platine.

La teneur en promoteur X1 ou X2, est de préférence comprise entre 0,005 à 10 %poids, de manière plus préférée entre 0,01 et 5% poids et de manière très préférée entre 0,1 et 2% poids.

De préférence le promoteur X1 est sélectionné parmi l'étain et le germanium. De préférence le promoteur X2 est l'indium. Le catalyseur selon l'invention peut éventuellement comprendre 2 promoteurs tels que par exemple l'étain et l'indium ou le germanium et l'indium. De manière très préférée, il s'agit alors d'étain et d'indium. Selon une variante, le catalyseur selon l'invention peut donc comprendre uniquement un promoteur X1, et de préférence X1 est l'étain.

Selon une autre variante, le catalyseur selon l'invention peut comprendre à la fois un promoteur X1 et un promoteur X2, et de façon préférée X1 est l'étain et X2 l'indium.

Lorsque le catalyseur comprend à la fois au moins un promoteur X1 et au moins un promoteur X2, le rapport atomique (X1+X2)/M est de préférence compris entre 0,3 et 8, de manière plus préférée compris entre 0,8 et 7, de manière encore plus préférée compris entre 1,4 et 7, de manière très préférée entre 1,4 et 6,0, voire entre 2,0 et 5,5.

Le catalyseur peut éventuellement comprendre en outre du phosphore. Des catalyseurs préférés selon l'invention peuvent donc comprendre par exemple de l'étain et du phosphore, ou de l'étain et du gallium et du phosphore, ou encore de l'étain et de l'indium et du phosphore. De manière très préférée, il s'agit alors d'étain et de phosphore. Lorsque le catalyseur contient du phosphore, la teneur en phosphore est de préférence comprise entre 0,01 et 5 % poids et de manière plus préférée comprise entre 0,05 et 2 % poids, voire entre 0,05 et 1 % poids Lorsque le catalyseur selon l'invention contient de l'étain, la teneur en étain est préférentiellement comprise entre 0,1 et 2 % poids, et très préférentiellement entre 0,1 et 0,7 % poids, voire entre 0,1 et 0,5 % poids.

Lorsque le catalyseur selon l'invention contient de l'indium en mélange avec d'autres promoteurs X1 ou X2 tels que par exemple de l'étain ou du gallium, la teneur en indium est de préférence comprise entre 0,05 et 3 % poids, de manière plus préférée entre 0,1 et 2 % poids et de manière encore plus préférée entre 0,2 et 2 % poids, voire entre 0,25 et 1 % poids. Le composé halogéné (ou l'halogène) est de préférence sélectionné dans le groupe constitué par : le fluor, le chlore, le brome et l'iode. Le catalyseur contient 0,1 à 15 % poids d'halogène, de manière plus préférée 0,2 à 8 % poids, de manière encore plus préférée de 0,5 à 5 % poids. Le chlore est l'halogène très préféré et dans ce cas, le catalyseur selon l'invention contient de manière très préférée 0,5 à 2 % poids, voire 0,7 à 1,5 % poids de chlore.

Le catalyseur selon l'invention présente par ailleurs une capacité d'adsorption d'hydrogène telle que le rapport entre la quantité d'hydrogène irréversiblement adsorbée et le métal du groupe du platine (également appelé rapport atomique $H_{ir}/M$) est supérieur à 0,40, de préférence supérieur à 0,43, de manière plus préférée compris entre 0,43 et 0,9, de manière encore plus préférée compris entre 0,45 et 0,8, et de manière très préférée compris entre 0,45 et 0,65.

Mesure du rapport $H_{ir}/M$

Le rapport $H_{ir}/M$ d'un catalyseur selon l'invention est déterminé au moyen de la technique de chimisorption d'hydrogène. Cette technique est connue de l'Homme du métier et décrite par exemple au chapitre 5 page 127 et suivantes du livre de revue intitulé: "Catalytic Naphta Reforming, Science and Technology, de G.J. Antos, A.M. Aitani et J.M. Parera, Éditeur Marcel Decker, 1995. Elle permet en effet de caractériser des systèmes complexes à base de platine où d'autres métaux et d'un ou plusieurs promoteurs.

Différents protocoles ont été proposés dans la littérature pour déterminer les quantités d'hydrogène chimisorbé. L'hydrogène peut être chimisorbé par un catalyseur métallique de façon réversible ou irréversible. Le protocole détaillé ci-après est préféré pour la détermination du rapport $H_{ir}/M$ selon l'invention qui fait intervenir la quantité $H_{ir}$ d'hydrogène chimisorbé de façon irréversible.

Protocole de traitement de l'échantillon:

a) Calcination sous courant d'air sec 2 h à 500°C.
b) Passage à l'air à température ambiante pour chargement dans la cellule de mesure par volumétrie en moins de 10 minutes.
c) Réduction dans la cellule avec augmentation de la température de 20°C à 450°C en 1 h, maintien à 450°C durant 4 h sous courant d'hydrogène (50 mlitres.min$^{-1}$), retour à 25°C sous hydrogène, puis scellage de l'évent de la cellule.

Mesures d'adsorption:

L'appareillage utilisé est un appareillage de volumétrie en statique .

a) Désorption sous vide dynamique ($10^{-5}$ mbar soit 1 mPa) à 350°C, 3 h puis retour à 25°C sous vide.

b) Mesure de la quantité d'hydrogène adsorbé à 25°C sous une pression donnée d'hydrogène, après adsorption pendant 60 minutes.

Les phases a) et b) sont reproduites de manière à tracer l'isotherme d'adsorption entre environ 40 et 300 mbar (4 à 30kPa)

Deux mesures sont réalisées en désorbant sous vide à 25°C durant 3 h qui permettent de mesurer la quantité d'hydrogène adsorbée de manière réversible.

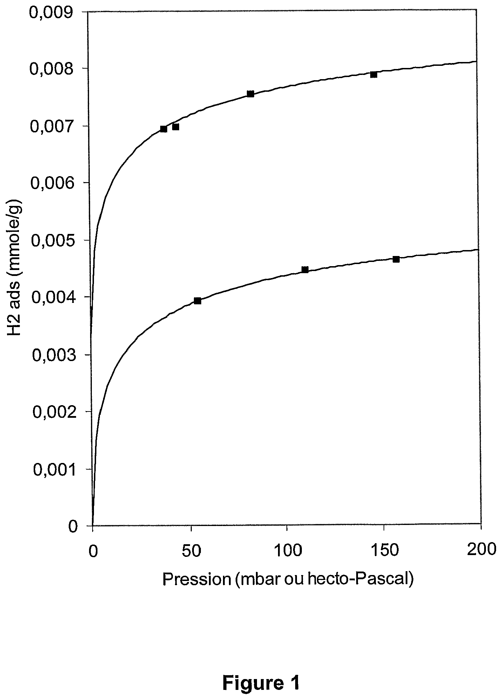

La figure 1 présente un exemple d'isotherme obtenue pour un catalyseur selon l'invention. La courbe du bas correspond à l'isotherme d'adsorption réversible et la courbe du haut représente l'isotherme d'adsorption totale.

Il est possible de modéliser l'isotherme d'adsorption, en admettant une adsorption dissociative de l'hydrogène sur le platine, selon l'équation de Langmuir, avec une partie irréversible $H_{ir}$ à 25°C et une partie réversible $H_{rev}$.

La quantité totale d'hydrogène adsorbée est définie par l'équation (I) ci-dessous:

$$Q_{ads} = H_{ir} + H_{rev}.(K_1.P)^{0.5}/(1+(K_1.P)^{0.5}) \qquad (I)$$

où P est la pression exprimée en mbar (ou hectopascal) et $K_1$ est la constante de Langmuir. La modélisation de l'isotherme d'adsorption permet donc de déterminer le paramètre $H_{ir}$

Indice de bimétallicité :

Le catalyseur optimisé selon l'invention présente un indice de bimétallicité (IBM) supérieur à 108. Cet indice défini ci-après est mesuré par la technique de titrage hydrogène/oxygène. De manière préférée cet indice IBM est supérieur à 110 et de manière très préférée supérieur à 115, voire à 120. Par ailleurs, selon une variante très préférée, cet indice est inférieur à 170, et de manière encore plus préférée inférieur à 160, voire inférieur à 150. Il est par ailleurs possible selon une autre variante préférée que cet indice soit compris entre 108 et 160, ou de façon très préférée entre 110 et 160, voire entre 110 et 150, ou encore entre 115 et 145.

L'indice de bimétallicité (IBM) est déterminé en exploitant d'une manière particulière la technique de titrage hydrogène-oxygène. Cette technique est connue de l'homme du métier pour déterminer la dispersion d'un métal, c'est-à-dire le rapport du nombre d'atomes de surface d'un métal au nombre total d'atomes de ce même métal. Elle est décrite par exemple au chapitre 5 pages 130 et 131 du livre de revue intitulé: "Catalytic Naphta Reforming, Science and Technology ", de G.J. Antos, A.M. Aitani et J.M. Parera, Éditeur Marcel Decker, 1995. Elle consiste à chimisorber de l'oxygène sur un métal M contenu dans un catalyseur préalablement réduit et contenant donc une couche d'hydrogène chimisorbé. La réaction stoechiométrique représentant l'étape de titrage de l'hydrogène chimisorbé par l'oxygène est considérée comme étant la suivante:

$$M\text{-}H + 3/4\ O_2 \rightarrow M\text{-}O + \tfrac{1}{2}\ H_2O$$

La quantité d'oxygène consommée lors du titrage permet de déterminer la quantité de sites métalliques accessibles. Dans le cas d'un système bimétallique Pt-Sn supporté il a été montré, par exemple par Sharma et al dans Applied Catalysis A 168 (1998) 251, qu'en opérant deux cycles successifs de titrage d'oxygène, la quantité d'oxygène adsorbée lors du premier cycle était plus importante que celle adsorbée lors du deuxième cycle. Ceci est expliqué par le fait que lors du premier cycle, la réduction de l'étain contribue à la consommation d'oxygène, alors que le deuxième cycle reflète essentiellement la chimisorption d'oxygène sur les sites de platine accessibles.

Ce deuxième cycle peut être utilisé pour déterminer la dispersion du métal M. Dans le catalyseur selon l'invention, la dispersion du métal M est de préférence supérieure à 80%, de manière plus préférée supérieure à 90% et de manière très préférée supérieure à 95%.

L'indice de bimétallicité dit « IBM » utilisé comme critère dans la présente invention est calculé à partir du volume d'oxygène consommé lors du premier titrage hydrogène-oxygène. Il est calculé comme suit:

$$\text{IBM} = (V1\ /24041)\ {*}4/3\ /\ (0{,}01\ T_M\ /\ MM)$$

avec

V1: volume d'oxygène consommé lors du premier titrage à 20°C sur le catalyseur préalablement réduit, exprimé en $cm^3$ par gramme de catalyseur.

$T_M$: teneur en métal du groupe du platine dans le catalyseur, exprimée en %poids
MM: masse molaire du métal du groupe du platine

L'indice de bimétallicité traduit le degré d'interaction du métal du groupe du platine avec tout promoteur présent sur le catalyseur. Le protocole expérimental de titrage hydrogène-oxygène préféré pour la détermination de l'indice de bimétallicité est le suivant:

a) calcination de 2 grammes de catalyseur sous courant d'air sec (20ml/minute) avec un débit de 1 Nl/(g.h) pendant 2h à 500°C,
b) retour à 20°C sous air sec,
c) purge par un gaz inerte (20ml/minute), de préférence de l'hélium de pureté supérieure à 99,999%,
d) passage sous hydrogène (20ml/minute), de préférence de pureté supérieure à 99,999% et réduction à 500°C pendant 2h
e) retour à 20°C
f) purge par un gaz inerte (20ml/minute), de préférence de l'hélium de pureté supérieure à 99,999%,
g) pulses d'oxygène de volume 0,27 cm$^3$, de préférence de pureté supérieure à 99,995% et purifié au moyen d'un ou plusieurs tamis moléculaires (tamis 3A, 4A ou 13X) à 20°C jusqu'à ne plus avoir de consommation d'oxygène, soit après au moins 10 pulses de surface constante.

Le volume d'oxygène consommé lors de l'étape g) est utilisé pour le calcul de l'indice de bimétallicité.

Support du catalyseur selon l'invention:

Le support poreux employé dans le catalyseur selon l'invention est généralement un oxyde réfractaire sélectionné parmi les oxydes de magnésium, de titane, de zirconium, d'alumine, de silicium ou leur mélange. De préférence il s'agit de silice, d'alumine ou de silice-alumine, et de manière très préférée d'alumine.
Selon l'invention, ledit support poreux se présente avantageusement sous forme de billes, d'extrudés, de pastilles ou de poudre. De manière très avantageuse, ledit support se présente sous forme de billes ou d'extrudés. Le volume poreux du support est de préférence compris entre 0,1 et 1,5 cm$^3$/g, de manière plus préférée compris entre 0,4 et 0,8 cm$^3$/g. Par ailleurs, ledit support poreux présente une surface spécifique comprise avantageusement entre 50 et 600 m$^2$/g, de préférence entre 100 et 400 m$^2$/g, voire entre 150 et 300 m$^2$/g.

Préparation du catalyseur selon l'invention :

Il a été découvert par la demanderesse que les catalyseurs selon l'invention étaient obtenus en particulier en déposant le promoteur X1 en deux fois (deux étapes distinctes), une première étape située avant l'introduction de l'élément du groupe du platine, et une deuxième étape située après l'introduction de l'élément du groupe du platine.
Le procédé de préparation du catalyseur selon l'invention comprend généralement les étapes suivantes :

a) introduction du promoteur X1 dans le support ou sur le support,
b) étape optionnelle de séchage du produit obtenu à l'issue de l'étape a,
c) calcination du produit obtenu à l'étape a ou éventuellement à l'étape b à une température de préférence comprise entre 350 et 650°C,
d) dépôt d'au moins un métal du groupe du platine M,
e) séchage optionnel sous atmosphère neutre ou contenant de l'oxygène, à une température modérée et n'excédant pas de préférence 150°C,
f) dépôt d'une fraction complémentaire du promoteur X1 sur le produit obtenu à l'étape d ou e, ladite fraction complémentaire dudit promoteur X1 étant déposée par mise en contact d'une solution de tétrachlorure d'étain ou de tétrachlorure de germanium,
g) séchage optionnel du produit obtenu à l'étape f,
h) calcination du produit obtenu à l'étape f ou g, cette calcination est de préférence menée en présence d'air et cet air peut également être enrichi en oxygène ou en azote, et dans le cas où les précurseurs du promoteur X1 ou du métal M utilisés dans la préparation du catalyseur ne contiennent pas d'halogène ou contiennent de l'halogène en quantité insuffisante, ajout d'un composé halogéné lors de la préparation ou, quand l'halogène est du chlore, un traitement d'oxychloration ou imprégnation par une solution aqueuse d'acide chlorhydrique.

Plus précisément, pour la première étape (étape a) d'introduction du promoteur X1 (utilisé seul ou en mélange), X1 peut être incorporé dans le support, par exemple lors de la synthèse du support ou lors de la mise en forme du support. X1 peut également être introduit sur le support, par exemple par imprégnation du support préalablement mis en forme. X1 peut également être introduit pour partie lors de la synthèse ou mise en forme du support et pour partie par dépôt sur le support mis en forme. 30% à 70% en poids, de façon préférée 40% à 65% en poids et de façon encore plus préférée 50% à 65% en poids, de la quantité totale de X1 entrant dans la composition du catalyseur selon l'invention se trouvent ainsi introduits dans le support ou déposés sur le support lors de cette première étape d'introduction.

La fraction de X1 introduite lors de la synthèse du support est incorporée par toute technique connue de l'homme du métier. Sans être exhaustives, les techniques d'addition avant ou pendant la dissolution des précurseurs oxydes du support, avec ou sans mûrissement, peuvent convenir. L'introduction peut donc être simultanée ou successive au mélange des précurseurs du support.

Selon une variante de la méthode de préparation selon l'invention, le promoteur X1 est introduit lors de la synthèse du support selon une technique de type sol-gel. Selon une autre variante, le promoteur X1 est ajouté à un sol d'alumine.

Selon une troisième variante de mise en oeuvre de l'invention le promoteur X1 est introduit lors de la mise en forme du support selon les techniques de l'art antérieur de mise en forme du support telles que les procédures de mise en forme par extrusion ou par coagulation en gouttes (Oil-Drop selon la terminologie anglo-saxonne).

Dans le cas où la fraction de X1 est déposée sur le support, après sa mise en forme, elle peut être imprégnée au moyen de toute technique connue de l'homme de l'art, et de façon préférée par imprégnation d'une solution contenant un ou plusieurs précurseurs de X1. L'imprégnation peut être réalisée par excès de solution ou bien à sec (le volume de solution contenant X1 correspondant au volume poreux du support). L'imprégnation peut être réalisée en présence d'espèces agissant sur l'interaction entre le précurseur du promoteur X1 et le support. Ces espèces peuvent être par exemple, et sans être limitatif, des acides minéraux (HCl, HNO3) ou organiques (types acides carboxyliques ou polycarboxyliques), et des composés organiques de type complexants, comme cela est décrit par exemple dans les brevets US 6,872,300 B1 et US 6,291,394 B1. De manière préférée l'imprégnation est réalisée selon toute technique connue de l'homme de l'art permettant d'obtenir une répartition homogène du promoteur X1 au sein du catalyseur.

Les précurseurs du promoteur X1 peuvent être minéraux ou de type organométallique, éventuellement de type organométallique hydrosoluble. X1 est de préférence choisi parmi les éléments germanium et étain. Les précurseurs contenant du germanium peuvent être choisis parmi au moins un des réactifs suivants, sans être exhaustif: oxydes, tétra-alkoxydes et fluorures de germanium. Un exemple de composé organométallique organosoluble est l'oxyde $(EtGeO)_2O$. Dans le cas de l'étain, différents précurseurs peuvent être utilisés, seuls ou en mélange. En particulier, l'étain peut être choisi et ce, de façon non limitative, dans le groupe formé par les composés halogénés, hydroxydes, carbonates, carboxylates, sulfates, tartrates et nitrates. Ces formes de l'étain peuvent être introduites dans le milieu de préparation du catalyseur telles quelles ou générées in situ (par exemple par introduction d'étain et d'acide carboxylique). Les précurseurs de type organométallique à base d'étain peuvent être par exemple SnR4, où R représente un groupe alkyl, par exemple le groupement butyle, $Me_3SnCl$, $Me_2SnCl_2$, $Et_3SnCl$, $Et_2SnCl_2$, $EtSnCl_3$, $iPrSnCl_2$ et les hydroxydes $Me_3SnOH$, $Me_2Sn(OH)_2$, $EtsSnOH$, $Et_2Sn(OH)_2$, les oxydes $(Bu_3Sn)_2O$, l'acétate $Bu_3SnOC(O)Me$. De façon préférée, les espèces halogénées, en particulier chlorées, d'étain seront utilisées. En particulier, $SnCl_2$ ou $SnCl_4$ seront employés avantageusement.

Quelle que soit la variante utilisée pour l'introduction d'une fraction du promoteur X1 lors de l'étape a, il peut être préféré d'effectuer un séchage du support (étape b) à la fin après ajout du promoteur. Ce séchage peut être effectué selon toute technique connue de l'homme du métier, par exemple à une température comprise entre 40°C et 200°C, de préférence entre 80°C et 180°C. Ce séchage peut être effectué avec une programmation de température et peut éventuellement comprendre des paliers de températures.

Le promoteur X1 ayant été introduit dans le support ou sur le support préalablement formé, le protocole de préparation des catalyseurs selon l'invention nécessite généralement une calcination avant le dépôt du métal M du groupe du platine (étape c). Cette calcination est de préférence menée à une température comprise entre 350 et 650°C et de préférence comprise entre 400 et 600°C et de manière encore plus préférée comprise entre 400 et 550°C. La montée en température peut être régulière ou inclure des paliers de températures intermédiaires, ces paliers étant atteints avec des vitesses de montée en température fixes ou variables. Ces montées en températures peuvent donc être identiques ou différer par leur vitesse (en degré par minute ou par heure). L'atmosphère de gaz utilisé durant la calcination contient de l'oxygène, de préférence entre 2 et 50% et de manière plus préférée entre 5 et 25%. De l'air peut donc également être utilisé lors de cette étape de calcination.

Après obtention du support contenant une fraction de X1 par rapport à la composition finale du catalyseur, un dépôt de métal du groupe du platine M est réalisé (étape d). Dans cette étape, le métal M peut être introduit par imprégnation à sec ou en excès de solution, en utilisant un précurseur ou un mélange de précurseurs contenant un métal M du groupe du platine. L'imprégnation peut être réalisée en présence d'espèces agissant sur l'interaction entre le précurseur du métal M et le support. Ces espèces peuvent être, et sans être limitatif, des acides minéraux (HCl, HNO3) ou organiques (types acides carboxyliques ou polycarboxyliques), et des composés organiques de type complexants. De manière préférée l'imprégnation est réalisée selon toute technique connue de l'homme de l'art permettant d'obtenir une répartition homogène du métal M au sein du catalyseur.

Les précurseurs du métal M font partie du groupe suivant, sans que cette liste ne soit limitative: acide hexachloroplatinique, acide bromoplatinique, chloroplatinate d'ammonium, chlorures de platine, dichlorocarbonyl dichlorure de platine, chlorure de platine tétra-amine.

A ce stade, le support contenant X1 (une fraction de la quantité totale en X1 visée dans le catalyseur final) et le platine est éventuellement séché (étape e), sous atmosphère neutre ou contenant de l'oxygène (de l'air pouvant être utilisé), à une température modérée et n'excédant pas de préférence 150°C. De préférence, le séchage est mis en oeuvre à une température inférieure à 100°C et sur une durée de quelques minutes à quelques heures.

A l'issue de cette étape éventuelle de séchage, une fraction complémentaire du promoteur X1 est déposée sur le produit obtenu à l'étape d ou e (étape f). Plus précisément, pour l'introduction de l'espèce X1 (utilisée seule ou en mélange) concernant cette étape, 30% au moins et 70% au plus, de façon préférée 35% au moins et 60% au plus, et de façon très préférée 35% au moins et 50% au plus de la quantité totale de X1 entrant dans la composition du catalyseur selon l'invention se trouvent ainsi introduits lors de cette deuxième étape (étape f) d'introduction de X1. La fraction complémentaire du promoteur X1 est déposée par mise en contact d'une solution contenant le précurseur.

Dans cette étape, et dans le cas des précurseurs d'étain, le tétrachlorure d'étain $SnCl_4$ sera exclusivement mis en oeuvre. Dans le cas des précurseurs de germanium, le tétrachlorure de germanium $GeCl_4$ sera exclusivement mis en oeuvre.

Un séchage optionnel du produit obtenu à l'étape f peut alors intervenir (étape g), sous atmosphère neutre ou contenant de l'oxygène (de l'air pouvant être utilisé), à une température modérée.

Cette étape est alors généralement suivie d'une calcination du produit obtenu à l'étape f ou g (étape h). Cette calcination est de préférence menée en présence d'air. Cet air peut également être enrichi en oxygène ou en azote. De préférence, la teneur en oxygène de ce gaz atteint 0,5 à 30% et de façon encore plus préférée 2 à 25%.

Cette calcination est menée à une température intervenant entre 350 et 600°C et de préférence entre 400 et 550°C et de manière encore plus préférée entre 450 et 550°C. La rampe de température doit être régulière et suffisamment rapide. Elle peut éventuellement contenir des paliers en température à partir de 350°C. La vitesse de montée en température sera supérieure ou égale à 5°C/mn. Cette vitesse de montée en température peut être supérieure à 10°C/mn. De façon préférée, cette vitesse de montée en température ne sera pas inférieure à 2°C/mn.

Le promoteur X2 optionnel peut être introduit à une ou plusieurs étapes de la préparation du catalyseur. Il peut par exemple être introduit avant, pendant ou après la première étape d'introduction de X1 (étape a, lors de la mise en forme du support ou par dépôt sur le support), seul ou en mélange. X2 peut également être introduit entre l'étape de calcination du support (étape c) et l'étape d'introduction du métal du groupe du platine (étape d). Une autre possibilité d'introduction de X2 est de l'incorporer avant l'addition de la seconde fraction de X1 (étape f), il peut enfin être introduit avant l'étape de calcination finale (étape h). Le promoteur X2 peut être introduit en une ou plusieurs fois, à condition de respecter les conditions d'introduction citées précédemment. Le promoteur X2 peut également être introduit par imprégnation lors d'une étape additionnelle (étape i) située après l'étape h, l'étape i est alors généralement suivie d'étapes j et k respectivement de séchage et de calcination du catalyseur dans les conditions détaillées précédemment pour les étapes de séchage e ou g ou de calcination h.

Dans le cas où un promoteur X2 est présent, le procédé de préparation selon l'invention peut donc comprendre en outre et avantageusement une étape additionnelle d'introduction d'un promoteur X2 située avant l'étape a, ou entre l'étape c et l'étape d ou juste avant l'étape f ou l'étape h, ou encore après l'étape h.

Le promoteur X2 optionnel peut être introduit au moyen de toute technique connue de l'homme du métier. Les échanges ioniques, imprégnations à sec ou en excès de solution sont appropriés lorsqu'il s'agit de dépôt sur le support (modifié par X1 ou non). Dans le cas d'une incorporation lors de la préparation du support, le promoteur X2 peut être ajouté par mélange, coprécipitation, dissolution sans être limitatif. Dans le cas du gallium, de l'indium, et du thallium, des nitrates ou halogénures peuvent être utilisés. Concernant l'indium, des précurseurs, seuls ou en mélange, de nitrate, chlorures ou bromures d'indium conviennent. D'autres précurseurs peuvent être également utilisés.

Lorsque les divers précurseurs utilisés dans la préparation du catalyseur selon l'invention ne contiennent pas d'halogène ou contiennent de l'halogène en quantité insuffisante, il peut être nécessaire d'ajouter un composé halogéné lors de la préparation. Tout composé connu de l'homme du métier peut être utilisé et incorporé à l'une quelconque des étapes de la préparation du catalyseur selon l'invention. En particulier, il est possible d'utiliser des composés de type Friedel et Crafts tel que du chlorure ou du bromure d'aluminium, du chlorure ou du bromure de fer ou du chlorure de zinc. Il est également possible d'utiliser des composés organiques tels que des halogénure de méthyle ou d'éthyle, par exemple du dichlorométhane, du chloroforme, du dichloroéthane, du méthyle chloroforme ou du tétrachlorure de carbone.

Le chlore peut également être ajouté au catalyseur selon l'invention au moyen d'un traitement d'oxychloration. Un tel traitement peut par exemple être effectué à 500°C pendant 4 heures sous un débit de 100 litres par heure d'air contenant la quantité de chlore gazeux nécessaire pour déposer la quantité de chlore souhaitée et une quantité d'eau avec un rapport molaire $H_2O/Cl$ voisin par exemple de 20.

Le chlore peut aussi être ajouté au moyen d'une imprégnation par une solution aqueuse d'acide chlorhydrique.

Un protocole typique consiste à imprégner le solide de façon à introduire la quantité de chlore souhaitée. Le catalyseur est maintenu en contact avec la solution aqueuse pendant une durée suffisamment longue pour déposer cette quantité de chlore, puis le catalyseur est essoré et séché à une température comprise entre 80 et 150°C, puis enfin calciné sous air à une température comprise entre 450°C et 600°C.

L'invention concerne également un procédé de reformage catalytique d'une charge hydrocarbonée en présence du catalyseur selon l'invention.

Le catalyseur selon l'invention peut en effet être mis en oeuvre dans des procédés de reformage des essences et de production de composés aromatiques.

Les procédés de reformage permettent d'augmenter l'indice d'octane des fractions essences provenant de la distillation du pétrole brut et/ou d'autres procédés de raffinage telles que par exemple le craquage catalytique ou le craquage thermique. les procédés de production d'aromatiques fournissent les produits de base (benzène, toluène, xylènes) utilisables en pétrochimie. Ces procédés revêtent un intérêt supplémentaire en contribuant à la production de quantités importantes d'hydrogène indispensable pour les procédés d'hydrogénation et d'hydrotraitement de la raffinerie. Ces deux types de procédés se différencient par le choix des conditions opératoires et de la composition de la charge qui sont connus de l'homme du métier.

La charge des procédés de reformage contient généralement des hydrocarbures paraffiniques, naphténiques et aromatiques contenant de 5 à 12 atomes de carbone par molécule. Cette charge est définie, entre autres, par sa densité et sa composition pondérale. Ces charges peuvent avoir un point initial d'ébullition compris entre 40°C et 70°C et un point final d'ébullition compris entre 160°C et 220°C. Elles peuvent également être constituées par une fraction ou un mélange de fractions essences ayant des points d'ébullition initiaux et finaux compris entre 40°C et 220°C. La charge peut ainsi également être constituée par un naphta lourd ayant de point d'ébullition compris entre 160°C à 200°C.

Typiquement, le catalyseur de reformage est chargé dans une unité et préalablement soumis à un traitement de réduction . Cette étape de réduction est généralement effectuée sous atmosphère d'hydrogène dilué ou pur et à une température avantageusement comprise entre 400°C et 600°C, de préférence entre 450°C et 550°C.

La charge est ensuite introduite en présence d'hydrogène et avec un rapport molaire hydrogène/hydrocarbures de la charge généralement compris entre 0,1 et 10, de préférence entre 1 et 8. Les conditions opératoires du reformage sont généralement les suivantes: une température de préférence comprise entre 400°C et 600°C, de manière plus préférée entre 450°C et 540°C, et une pression de préférence comprise entre 0,1 MPa et 4 MPa et de manière plus préférée entre 0,25 MPa et 3,0 MPa. Tout ou partie de l'hydrogène produit peut être recyclé à l'entrée du réacteur de reformage.

**EXEMPLES:**

Les exemples qui suivent illustrent l'invention.

Exemple 1 (invention) : *Préparation du catalyseur A SnPtSn/Al2O3-Cl*

On prépare un catalyseur A contenant 0,3% poids de platine, 0,4% poids d'étain, et 1% poids de chlore, déposés sur un support d'alumine gamma dont la surface spécifique est de 200 m$^2$/g.

A 100 g de support alumine on ajoute 200 cm$^3$ d'une solution aqueuse contenant du dichlorure d'étain en présence d'acide chlorhydrique. On laisse en contact 4 heures, on filtre, on sèche à 120°C puis on calcine pendant 2 heures à 500°C sous un débit d'air de 100 litres par heure. La quantité de dichlorure d'étain est choisie de façon à obtenir 0,2% poids d'étain sur le produit calciné. On met ensuite le solide en contact avec 400 cm$^3$ d'une solution aqueuse d'acide hexachloroplatinique et d'acide chlorhydrique. On laisse en contact 4 heures puis on essore. On sèche à 90°C puis on met en contact avec 200 cm$^3$ d'une solution aqueuse contenant du tétrachlorure d'étain en présence d'acide chlorhydrique. On laisse en contact 4 heures, on filtre, on sèche à 120°C puis on calcine pendant 2 heures à 500°C sous un débit d'air de 100 litres par heure, avec une vitesse de montée en température de 7°C par minute. La quantité de tétrachlorure d'étain est choisie de façon à obtenir au total 0,4% poids d'étain sur le produit calciné.

Exemple 2 (invention) : *Préparation du catalyseur B SnPtSn/Al2O3-Cl*

Un catalyseur B est préparé selon le mode opératoire décrit dans l'exemple 1, en choisissant cette fois la quantité de dichlorure d'étain de façon à obtenir 0,27% poids d'étain sur le produit intermédiaire calciné, et la quantité de tétrachlorure d'étain de façon à compléter pour obtenir toujours 0,4% d'étain sur le catalyseur final.

Exemple 3 (comparatif): *Préparation du catalyseur C SnPt/Al2O3-Cl*

Un catalyseur C est préparé sur le même support et avec les mêmes teneurs en étain, platine et chlore qu'en exemple 1.

A 100 g de support alumine on ajoute 200 cm$^3$ d'une solution aqueuse contenant du dichlorure d'étain en présence d'acide chlorhydrique. On laisse en contact 4 heures, on filtre, on sèche à 120°C puis on calcine pendant 2 heures à 500°C sous un débit d'air de 100 litres par heure. La quantité de dichlorure d'étain est choisie de façon à obtenir 0,4% poids d'étain sur le produit calciné. On met ensuite le solide en contact avec 400 cm$^3$ d'une solution aqueuse d'acide hexachloroplatinique et d'acide chlorhydrique. On laisse en contact 4 heures puis on essore. On sèche à 120°C puis on calcine pendant 2 heures à 500°C sous un débit d'air de 100 litres par heure, avec une vitesse de montée en température de 7°C par minute.

Exemple 4 (comparatif): *Préparation d'un catalyseur D SnPtSn/Al2O3-Cl*

Un catalyseur C est préparé selon le mode opératoire décrit dans l'exemple 1, avec pour seule différence que lors des deux imprégnations d'étain, le précurseur utilisé on filtre, on sèche à 120°C puis on calcine pendant 2 heures à 500°C sous un débit d'air de 100 litres par heure. La quantité de dichlorure d'étain est choisie de façon à obtenir 0,4% poids d'étain sur le produit calciné. On met ensuite le solide en contact avec 400 cm$^3$ d'une solution aqueuse d'acide hexachloroplatinique et d'acide chlorhydrique. On laisse en contact 4 heures puis on essore. On sèche à 120°C puis on calcine pendant 2 heures à 500°C sous un débit d'air de 100 litres par heure, avec une vitesse de montée en température de 7°C par minute.

Exemple 4 (comparatif): *Préparation d'un catalyseur D SnPtSn/Al2O3-Cl*

Un **catalyseur D** est préparé selon le mode opératoire décrit dans l'exemple 1, avec pour seule différence que lors des deux imprégnations d'étain, le précurseur utilisé est une solution aqueuse contenant du dichlorure d'étain en présence d'acide chlorhydrique.

Exemple 5 (invention) : *Préparation du catalyseur E SnPtInSn/Al2O3-Cl*

Un catalyseur E est préparé sur le même support que dans l'exemple 1, en déposant 0,3% poids de platine, 0,4% poids d'étain, 0,2% poids d'indium et 1% poids de chlore. A 100 g de support alumine on ajoute 200 cm$^3$ d'une solution aqueuse contenant du dichlorure d'étain en présence d'acide chlorhydrique. On laisse en contact 4 heures, on filtre, on sèche à 120°C puis on calcine pendant 2 heures à 500°C sous un débit d'air de 100 litres par heure. La quantité de dichlorure d'étain est choisie de façon à obtenir 0,2% poids d'étain sur le produit calciné. On met ensuite le solide en contact avec 400 cm$^3$ d'une solution aqueuse d'acide hexachloroplatinique et d'acide chlorhydrique. On laisse en contact 4 heures puis on essore. On sèche à 90°C puis on met en contact avec 300 cm$^3$ d'une solution aqueuse contenant du nitrate d'indium en présence d'acide chlorhydrique. De nouveau on laisse en contact 4 heures, on essore, on sèche puis on met en contact avec 200 cm$^3$ d'une solution aqueuse contenant du tétrachlorure d'étain en présence d'acide chlorhydrique. On laisse en contact 4 heures, on essore, on sèche à 120°C puis on calcine pendant 2 heures à 500°C sous un débit d'air de 100 litres par heure, avec une vitesse de montée en température de 7°C par minute. La quantité de est une solution aqueuse contenant du dichlorure d'étain en présence d'acide chlorhydrique.

Exemple 5 (invention) : *Préparation du catalyseur E SnPtInSn/Al2O3-Cl*

Un catalyseur E est préparé sur le même support que dans l'exemple 1, en déposant 0,3% poids de platine, 0,4% poids d'étain, 0,2% poids d'indium et 1% poids de chlore. A 100 g de support alumine on ajoute 200 cm$^3$ d'une solution aqueuse contenant du dichlorure d'étain en présence d'acide chlorhydrique. On laisse en contact 4 heures, on filtre, on sèche à 120°C puis on calcine pendant 2 heures à 500°C sous un débit d'air de 100 litres par heure. La quantité de dichlorure d'étain est choisie de façon à obtenir 0,2% poids d'étain sur le produit calciné. On met ensuite le solide en contact avec 400 cm$^3$ d'une solution aqueuse d'acide hexachloroplatinique et d'acide chlorhydrique. On laisse en contact 4 heures puis on essore. On sèche à 90°C puis on met en contact avec 300 cm$^3$ d'une solution aqueuse contenant du nitrate d'indium en présence d'acide chlorhydrique. De nouveau on laisse en contact 4 heures, on essore, on sèche puis on met en contact avec 200 cm$^3$ d'une solution aqueuse contenant du tétrachlorure d'étain en présence d'acide chlorhydrique. On laisse en contact 4 heures, on essore, on sèche à 120°C puis on calcine pendant 2 heures à 500°C sous un débit d'air de 100 litres par heure, avec une vitesse de montée en température de 7°C par minute. La quantité de tétrachlorure d'étain est choisie de façon à obtenir au total 0,4% poids d'étain sur le produit calciné.

Exemple 6 (invention) : *Préparation du catalyseur F PtSn/(Al2O3-Sn-In)-Cl*

Un support de billes d'alumine, contenant 0,2% poids d'étain et 0,2 % poids d'indium, avec un diamètre moyen de 1,2 mm, ayant une surface BET de 205 m2/g, est préparé en mettant en contact du dichlorure d'étain et du trichlorure d'indium avec un hydrosol d'alumine obtenu par hydrolyse de chlorure d'aluminium. On fait ensuite passer l'hydrosol d'alumine ainsi obtenu dans une colonne verticale remplie d'huile additivée. Les sphères ainsi obtenues sont traitées thermiquement jusqu'à 600°C de façon à obtenir des billes de bonne résistance mécanique.

Un catalyseur F est préparé sur ce support, en déposant 0,3% poids de platine, 0,2% poids supplémentaires d'étain de façon à obtenir 0,4% poids d'étain et 1% poids de chlore sur le catalyseur final.

A 100 g du support alumine contenant de l'étain et de l'indium, on ajoute 400 cm³ d'une solution aqueuse d'acide hexachloroplatinique et d'acide chlorhydrique. On laisse en contact 4 heures puis on essore. On sèche à 90°C puis on met en contact avec 200 cm³ d'une solution aqueuse du tétrachlorure d'étain en présence d'acide chlorhydrique. On laisse en contact 4 heures, on essore, on sèche à 120°C puis on calcine pendant 2 heures à 500°C sous un débit d'air de 100 litres par heure, avec une vitesse de montée en température de 7°C par minute. La quantité de tétrachlorure d'étain est choisie de façon à obtenir au total 0,4% poids d'étain sur le produit calciné.

Exemple 7 (invention) : *Préparation du catalyseur G SnInPtSn/Al2O3*

Un catalyseur G est préparé sur le même support que dans l'exemple 1, en déposant 0,3% poids de platine, 0,4% poids d'étain, 0,2% poids d'indium et 1% poids de chlore . A 100 g de support alumine on ajoute 200 cm³ d'une solution aqueuse contenant du dichlorure d'étain en présence d'acide chlorhydrique. On laisse en contact 4 heures, on filtre, on sèche à 120°C puis on calcine pendant 2 heures à 500°C sous un débit d'air de 100 litres par heure. La quantité de dichlorure d'étain est choisie de façon à obtenir 0,2% poids d'étain sur le produit calciné. On met ensuite le solide en contact avec 300 cm³ d'une solution aqueuse contenant du nitrate d'indium en présence d'acide chlorhydrique. De nouveau on laisse en contact 4 heures, on essore et on sèche le solide. On met ensuite le solide en contact avec 400 cm³ d'une solution aqueuse d'acide hexachloroplatinique et d'acide chlorhydrique. On laisse en contact 4 heures puis on essore. On sèche à 90°C puis on met en contact avec 200 cm³ d'une solution aqueuse contenant du tétrachlorure d'étain en présence d'acide chlorhydrique. On laisse en contact 4 heures, on essore, on sèche à 120°C puis on calcine pendant 2 heures à 500°C sous un débit d'air de 100 litres par heure, avec une vitesse de montée en température de 7°C par minute. La quantité de tétrachlorure d'étain est choisie de façon à obtenir au total 0,4% poids d'étain sur le produit calciné.

Exemple 8: *Evaluation des performances des catalyseurs A à G en reformage catalytique.*

Les valeurs d'indice de bimétallicité et de rapport atomique Hir/Pt des catalyseurs A à G des exemples 1 à 7 ont été déterminées selon les méthodes présentées dans la description détaillée et sont indiquées dans le tableau 1.

Des échantillons des catalyseurs dont les préparations ont été décrites dans les exemples 1 à 7 ont été mis en oeuvre dans un lit réactionnel adapté à la conversion d'une charge hydrocarbonée, de type naphta issu de la distillation de pétrole. Ce naphta admet la composition suivante (en masse):

40,5% en composés paraffiniques,
45,1% en naphtènes
14,4% en molécules aromatiques,

pour une densité totale de 0,757 g/cm3.

L'indice d'octane recherche de la charge est proche de 55.

Après chargement dans le réacteur, les catalyseurs sont activés par traitement thermique sous atmosphère d'hydrogène pur, durant une période de 2h à 490°C.

Tableau 1 : caractéristiques et performances des catalyseurs A à G

| Catalyseur | IBM (%) | Hir/Pt | Rendement Reformat (% poids) | Indice d'octane recherche RON | Rendement Aromatiques (% poids) | Rendement C1-C4 (% poids) |
|---|---|---|---|---|---|---|
| A (invention) | 115 | 0,52 | +0,45% | 101,9 | +0,2 | -0,3 |

(suite)

| Catalyseur | IBM (%) | Hir/Pt | Rendement Reformat (% poids) | Indice d'octane recherche RON | Rendement Aromatiques (% poids) | Rendement C1-C4 (% poids) |
|---|---|---|---|---|---|---|
| B (invention) | 111 | 0,55 | Base | 102,3 | Base | Base |
| C (art antérieur) | 103 | 0,65 | -0,95 | 101,9 | -0,85% | +1,1 |
| D (art antérieur) | 109 | 0,34 | -0,85% | 101,9 | -0,9% | +0,75% |
| E (invention) | 130 | 0,50 | +1,4% | 102,0 | +1,25% | -1,50% |
| F (invention) | 122 | 0,51 | +1,3% | 101,9 | +1,1% | -1,4% |
| G (invention) | 133 | 0,49 | +1,7% | 102,2 | +1,4% | -1,8 |

L'évaluation des performances catalytiques est effectuée dans des conditions de réactions de reformage, en présence d'hydrogène et du naphta décrit précédemment. En particulier, les conditions de mise en oeuvre et de comparaison des catalyseurs sont les suivantes:

-    pression du réacteur maintenu à 8barg (0,8 MPag),

-    débit de charge de 2,0 kg/h par kg de catalyseur.

-    rapport molaire hydrogène/hydrocarbures de la charge: 4

La comparaison est effectuée à iso qualité d'indice d'octane recherche des effluents liquides (appelé reformats) résultants de la conversion catalytique de la charge. La comparaison est effectuée pour un indice d'octane recherche de 102.

**Revendications**

1.  Catalyseur comprenant un métal M du groupe du platine, au moins un promoteur X1 sélectionné dans le groupe constitué par l'étain, le germanium et le plomb, un composé halogéné et un support poreux, dans lequel le rapport atomique X1/M est compris entre 0,3 et 8, le rapport $H_{ir}/M$ mesuré par chimisorption d'hydrogène irréversible est supérieur à 0,40 et l'indice IBM de bimétallicité mesuré par titrage hydrogène/oxygène est supérieur à 108, ledit catalyseur contenant 0,1 à 15 % poids de composé halogéné et étant préparé selon les étapes suivantes :

     a) introduction du promoteur X1 dans le support ou sur le support,
     c) calcination du produit obtenu à l'étape a à une température de préférence comprise entre 350 et 650°C,
     d) dépôt d'au moins un métal du groupe du platine M,
     e) séchage optionnel sous atmosphère neutre ou contenant de l'oxygène, à une température modérée et n'excédant pas de préférence 150°C,
     f) dépôt d'une fraction complémentaire du promoteur X1 sur le produit obtenu à l'étape d ou e, ladite fraction complémentaire dudit promoteur X1 étant déposée par mise en contact d'une solution de tétrachlorure d'étain ou de tétrachlorure de germanium,
     h) calcination du produit obtenu à l'étape f), cette calcination est de préférence menée en présence d'air et cet air peut également être enrichi en oxygène ou en azote,
     et dans le cas où les précurseurs du promoteur X1 ou du métal M utilisés dans la préparation du catalyseur ne contiennent pas d'halogène ou contiennent de l'halogène en quantité insuffisante, ajout d'un composé halogéné lors de la préparation
     ou, quand l'halogène est du chlore, un traitement d'oxychloration ou imprégnation par une solution aqueuse d'acide chlorhydrique.

**2.** Catalyseur selon la revendication 1 comprenant en outre au moins un promoteur X2 sélectionné dans le groupe constitué par le gallium, l'indium et le thallium, le rapport X2/M étant compris entre 0,3 et 8.

**3.** Catalyseur selon l'une des revendications 1 ou 2 dans lequel le rapport atomique X1/M est compris entre 0,6 et 6.

**4.** Catalyseur selon la revendication 2 dans lequel le rapport atomique (X1+X2)/M est compris entre 0,3 et 8.

**5.** Catalyseur selon la revendication 2 dans lequel le rapport X1/M est compris entre 1,0 et 2,9 et le rapport X2/M est compris entre 0,9 et 4.

**6.** Catalyseur selon la revendication 1 comprenant uniquement un promoteur X1 et dans lequel X1 est l'étain.

**7.** Catalyseur selon la revendication 2 comprenant un promoteur X1 et un promoteur X2 et dans lequel X1 est l'étain et X2 l'indium.

**8.** Catalyseur selon l'une des revendications précédentes dans lequel le catalyseur comprend en outre du phosphore.

**9.** Catalyseur selon la revendication 8 dans lequel la teneur en phosphore est comprise entre 0,01 et 5 %poids.

**10.** Catalyseur selon l'une des revendications précédentes dans lequel le rapport $H_{ir}/M$ est compris entre 0,43 et 0,9.

**11.** Catalyseur selon l'une des revendications précédentes dans lequel le rapport $H_{ir}/M$ est compris entre 0,45 et 0,65.

**12.** Catalyseur selon l'une des revendications précédentes dans lequel l'indice IBM de bimétallicité mesuré par titrage hydrogène/oxygène est supérieur à 115.

**13.** Catalyseur selon l'une des revendications 1 à 11 dans lequel l'indice IBM de bimétallicité mesuré par titrage hydrogène/oxygène est compris entre 110 et 160, de préférence compris entre 115 et 145.

**14.** Catalyseur selon l'une des revendications précédentes dans lequel le composé halogéné est sélectionné dans le groupe constitué par : le fluor, le chlore, le brome et l'iode.

**15.** Catalyseur selon l'une des revendications précédentes dans lequel le composé halogéné est le chlore et le catalyseur contient 0,5 à 2% poids de chlore.

**16.** Procédé de préparation d'un catalyseur comprenant un métal M du groupe du platine, au moins un promoteur X1 sélectionné dans le groupe constitué par l'étain, le germanium et le plomb, un composé halogéné et un support poreux, dans lequel le rapport atomique X1/M est compris entre 0,3 et 8, le rapport $H_{ir}/M$ mesuré par chimisorption d'hydrogène irréversible est supérieur à 0,40 et l'indice IBM de bimétallicité mesuré par titrage hydrogène/oxygène est supérieur à 108, ledit catalyseur contenant 0,1 à 15 % poids de composé halogéné, ledit procédé comprenant les étapes suivantes :

a) introduction du promoteur X1 dans le support ou sur le support,
c) calcination du produit obtenu à l'étape a à une température de préférence comprise entre 350 et 650°C,
d) dépôt d'au moins un métal du groupe du platine M,
e) séchage optionnel sous atmosphère neutre ou contenant de l'oxygène, à une température modérée et n'excédant pas de préférence 150°C,
f) dépôt d'une fraction complémentaire du promoteur X1 sur le produit obtenu à l'étape d ou e, ladite fraction complémentaire dudit promoteur X1 étant déposée par mise en contact d'une solution de tétrachlorure d'étain ou de tétrachlorure de germanium,
h) calcination du produit obtenu à l'étape f), cette calcination est de préférence menée en présence d'air et cet air peut également être enrichi en oxygène ou en azote,
et dans le cas où les précurseurs du promoteur X1 ou du métal M utilisés dans la préparation du catalyseur ne contiennent pas d'halogène ou contiennent de l'halogène en quantité insuffisante, ajout d'un composé halogéné lors de la préparation
ou, quand l'halogène est du chlore, un traitement d'oxychloration ou imprégnation par une solution aqueuse d'acide chlorhydrique.

**17.** Procédé de préparation selon la revendication 16 comprenant en outre une étape b) de séchage du produit obtenu à l'issue de l'étape a.

**18.** Procédé de préparation selon l'une des revendications 16 ou 17 comprenant en outre, avant l'étape h), une étape g) de séchage du produit obtenu à l'issue de l'étape f.

**19.** Procédé de préparation selon l'une des revendications 16 à 18 dans lequel un promoteur X2 est introduit à une ou plusieurs étapes de la préparation sélectionnées parmi les étapes a), d), et f).

**20.** Procédé de préparation selon l'une des revendications 16 à 19 comprenant en outre une étape additionnelle d'introduction d'un promoteur X2 située avant l'étape a), ou entre l'étape c) et l'étape d), ou juste avant l'étape f)ou l'étape h), ou encore après l'étape h).

**21.** Procédé de préparation selon l'une des revendications 16 à 20 dans lequel 30% au moins et 70% au plus de la quantité totale de X1 entrant dans la composition du catalyseur selon l'invention se trouvent introduits lors de la deuxième étape f) d'introduction de X1.

**22.** Procédé de reformage catalytique d'une charge hydrocarbonée en présence du catalyseur selon l'une des revendications 1 à 15.


## Patentansprüche

**1.** Katalysator, der ein Metall M der Platingruppe, mindestens einen Promotor X1, der aus der aus Zinn, Germanium und Blei bestehenden Gruppe ausgewählt ist, eine Halogenverbindung und einen porösen Träger umfasst, wobei das Atomverhältnis X1/M zwischen 0,3 und 8 beträgt, das mittels irreversibler Wasserstoff-Chemisorption gemessene Verhältnis $H_{ir}/M$ mehr als 0,40 beträgt und der mittels Wasserstoff-Sauerstoff-Titration gemessene Bimetallizitätsindex IBM mehr als 108 beträgt, wobei der Katalysator 0,1 bis 15 Gew.-% der Halogenverbindung enthält und gemäß den folgenden Schritten hergestellt wird:

a) der Einführung des Promotors X1 in den Träger oder auf den Träger,
c) der Calcinierung des in Schritt a) erhaltenen Produkts bei einer Temperatur vorzugsweise zwischen 350 und 650 °C,
d) der Abscheidung mindestens eines Metalls M der Platingruppe,
e) der optionalen Trocknung unter einer neutralen oder einer Sauerstoff enthaltenden Atmosphäre bei einer Temperatur, die mäßig ist und vorzugsweise nicht 150 °C übersteigt,
f) der Abscheidung einer komplementären Fraktion des Promotors X1 auf dem in Schritt d oder e erhaltenen Produkt, wobei die komplementäre Fraktion des Promotors X1 durch das In-Kontakt-Bringen einer Lösung von Zinntetrachlorid oder Germaniumtetrachlorid abgeschieden wird,
h) der Calcinierung des in Schritt f) erhaltenen Produkts, wobei diese Calcinierung vorzugsweise in Gegenwart von Luft durchgeführt wird und diese Luft auch mit Sauerstoff oder Stickstoff angereichert sein kann, und wobei in demjenigen Fall, in dem die bei der Herstellung des Katalysators verwendeten Vorstufen des Promotors X1 oder des Metalls M kein Halogen enthalten oder Halogen in einer unzureichenden Menge enthalten, der Zugabe einer Halogenverbindung bei der Herstellung oder, wenn das Halogen Chlor ist, einer Oxychlorierungs- oder Tränkbehandlung mit einer wässrigen Salzsäurelösung.

**2.** Katalysator nach Anspruch 1, der weiterhin mindestens einen Promotor X2 umfasst, der ausgewählt ist aus der Gruppe bestehend aus Gallium, Indium und Thallium, wobei das Verhältnis X2/M zwischen 0,3 und 8 beträgt.

**3.** Katalysator nach einem der Ansprüche 1 oder 2, wobei das Atomverhältnis X1/M zwischen 0,6 und 6 beträgt.

**4.** Katalysator nach Anspruch 2, wobei das Atomverhältnis (X1+X2)/M zwischen 0,3 und 8 beträgt.

**5.** Katalysator nach Anspruch 2, wobei das Verhältnis X1/M zwischen 1,0 und 2,9 beträgt und das Verhältnis X2/M zwischen 0,9 und 4 beträgt.

6. Katalysator nach Anspruch 1, der ausschließlich einen Promotor X1 umfasst und wobei X1 Zinn ist.

7. Katalysator nach Anspruch 2, der einen Promotor X1 und einen Promotor X2 umfasst und wobei X1 Zinn und X2 Indium ist.

8. Katalysator nach einem der vorhergehenden Ansprüche, wobei der Katalysator weiterhin Phosphor umfasst.

9. Katalysator nach Anspruch 8, wobei der Phosphorgehalt zwischen 0,01 und 5 Gew.-% beträgt.

10. Katalysator nach einem der vorhergehenden Ansprüche, wobei das Verhältnis $H_{ir}/M$ zwischen 0,43 und 0,9 beträgt.

11. Katalysator nach einem der vorhergehenden Ansprüche, wobei das Verhältnis $H_{ir}/M$ zwischen 0,45 und 0,65 beträgt.

12. Katalysator nach einem der vorhergehenden Ansprüche, wobei der mittels Wasserstoff-Sauerstoff-Titration gemessene Bimetallizitätsindex IBM mehr als 115 beträgt.

13. Katalysator nach einem der Ansprüche 1 bis 11, wobei der mittels Wasserstoff-Sauerstoff-Titration gemessene Bimetallizitätsindex IBM zwischen 110 und 160, vorzugsweise zwischen 115 und 145, beträgt.

14. Katalysator nach einem der vorhergehenden Ansprüche, wobei die Halogenverbindung ausgewählt ist aus der Gruppe bestehend aus: Fluor, Chlor, Brom und Iod.

15. Katalysator nach einem der vorhergehenden Ansprüche, wobei es sich bei der Halogenverbindung um Chlor handelt und der Katalysator 0,5 bis 2 Gew.-% Chlor enthält.

16. Verfahren zur Herstellung eines Katalysators, der ein Metall M der Platingruppe, mindestens einen Promotor X1, der aus der aus Zinn, Germanium und Blei bestehenden Gruppe ausgewählt ist, eine Halogenverbindung und einen porösen Träger umfasst, wobei das Atomverhältnis X1/M zwischen 0,3 und 8 beträgt, das mittels irreversibler Wasserstoff-Chemisorption gemessene Verhältnis $H_{ir}/M$ mehr als 0,40 beträgt und der mittels Wasserstoff-Sauerstoff-Titration gemessene Bimetallizitätsindex IBM mehr als 108 beträgt, wobei der Katalysator 0,1 bis 15 Gew.-% der Halogenverbindung enthält, wobei das Verfahren die folgenden Schritte umfasst:

a) die Einführung des Promotors X1 in den Träger oder auf den Träger,
c) die Calcinierung des in Schritt a) erhaltenen Produkts bei einer Temperatur vorzugsweise zwischen 350 und 650 °C,
d) die Abscheidung mindestens eines Metalls M der Platingruppe,
e) die optionale Trocknung unter einer neutralen oder einer Sauerstoff enthaltenden Atmosphäre bei einer Temperatur, die mäßig ist und vorzugsweise nicht 150 °C übersteigt,
f) die Abscheidung einer komplementären Fraktion des Promotors X1 auf dem in Schritt d oder e erhaltenen Produkt, wobei die komplementäre Fraktion des Promotors X1 durch das In-Kontakt-Bringen einer Lösung von Zinntetrachlorid oder Germaniumtetrachlorid abgeschieden wird,
h) die Calcinierung des in Schritt f) erhaltenen Produkts, wobei diese Calcinierung vorzugsweise in Gegenwart von Luft durchgeführt wird und diese Luft auch mit Sauerstoff oder Stickstoff angereichert sein kann, und wobei in demjenigen Fall, in dem die bei der Herstellung des Katalysators verwendeten Vorstufen des Promotors X1 oder des Metalls M kein Halogen enthalten oder Halogen in einer unzureichenden Menge enthalten, die Zugabe einer Halogenverbindung bei der Herstellung oder, wenn das Halogen Chlor ist, eine Oxychlorierungs- oder Tränkbehandlung mit einer wässrigen Salzsäurelösung.

17. Herstellungsverfahren nach Anspruch 16, das weiterhin einen Schritt b) des Trocknens des aus Schritt a erhaltenen Produkts umfasst.

18. Herstellungsverfahren nach einem der Ansprüche 16 oder 17, das weiterhin vor Schritt h) einen Schritt g) des Trocknens des aus Schritt f erhaltenen Produkts umfasst.

19. Herstellungsverfahren nach einem der Ansprüche 16 bis 18, wobei ein Promotor X2 in einen oder mehrere Schritte der Herstellung eingeführt wird, die aus den Schritten a), d) und f) ausgewählt sind.

20. Herstellungsverfahren nach einem der Ansprüche 16 bis 19, das weiterhin einen zusätzlichen Schritt der Einführung eines Promotors X2 umfasst, der vor Schritt a) oder zwischen Schritt c) und Schritt d) oder unmittelbar vor Schritt f) oder Schritt h) oder auch nach Schritt h) angeordnet ist.

21. Herstellungsverfahren nach einem der Ansprüche 16 bis 20, wobei mindestens 30 % und höchstens 70 % der Gesamtmenge an X1, die in die erfindungsgemäße Katalysatorzusammensetzung gelangen, im zweiten Schritt f) der Einführung von X1 eingeführt werden.

22. Verfahren zum katalytischen Reforming eines Kohlenwasserstoff-Einsatzmaterials in Gegenwart eines Katalysators nach einem der Ansprüche 1 bis 15.

**Claims**

1. Catalyst comprising a platinum group metal M, at least one promoter X1 selected from the group consisting of tin, germanium and lead, a halogenated compound and a porous support, in which the X1/M atomic ratio is between 0.3 and 8, the $H_{ir}$/M ratio measured by irreversible hydrogen chemisorption is greater than 0.40 and the bimetallicity index BMI measured by hydrogen/oxygen titration is greater than 108, said catalyst containing 0.1% to 15% by weight of halogenated compound and being prepared according to the following steps:

   a) introduction of the promoter X1 into the support or onto the support,
   c) calcination of the product obtained in step a at a temperature preferably between 350°C and 650°C,
   d) deposition of at least one platinum group metal M,
   e) optional drying under an atmosphere that is neutral or contains oxygen, at a moderate temperature that preferably does not exceed 150°C,
   f) deposition of a complementary fraction of the promoter X1 on the product obtained in step d or e, said complementary fraction of said promoter X1 being deposited by contacting of a tin tetrachloride or germanium tetrachloride solution,
   h) calcination of the product obtained in step f), this calcination is preferably carried out in the presence of air and this air may also be enriched in oxygen or in nitrogen,
   and in the case where the precursors of the promoter X1 or of the metal M that are used in the preparation of the catalyst do not contain halogen or contain an insufficient amount of halogen, addition of a halogenated compound during the preparation
   or, when the halogen is chlorine, an oxychlorination treatment or impregnation with an aqueous hydrochloric acid solution.

2. Catalyst according to Claim 1, further comprising at least one promoter X2 selected from the group consisting of gallium, indium and thallium, the X2/M ratio being between 0.3 and 8.

3. Catalyst according to either of Claims 1 and 2, in which the X1/M atomic ratio is between 0.6 and 6.

4. Catalyst according to Claim 2, in which the (X1+X2)/M atomic ratio is between 0.3 and 8.

5. Catalyst according to Claim 2, in which the X1/M ratio is between 1.0 and 2.9 and the X2/M ratio is between 0.9 and 4.

6. Catalyst according to Claim 1, comprising only a promoter X1 and in which X1 is tin.

7. Catalyst according to Claim 2, comprising a promoter X1 and a promoter X2 and in which X1 is tin and X2 is indium.

8. Catalyst according to one of the preceding claims, in which the catalyst further comprises phosphorus.

9. Catalyst according to Claim 8, in which the phosphorus content is between 0.01% and 5% by weight.

10. Catalyst according to one of the preceding claims, in which the $H_{ir}$/M ratio is between 0.43 and 0.9.

11. Catalyst according to one of the preceding claims, in which the $H_{ir}$/M ratio is between 0.45 and 0.65.

12. Catalyst according to one of the preceding claims, in which the bimetallicity index BMI measured by hydrogen/oxygen titration is greater than 115.

13. Catalyst according to one of Claims 1 to 11, in which the bimetallicity index BMI measured by hydrogen/oxygen titration is between 110 and 160, preferably between 115 and 145.

14. Catalyst according to one of the preceding claims, in which the halogenated compound is selected from the group consisting of: fluorine, chlorine, bromine and iodine.

15. Catalyst according to one of the preceding claims, in which the halogenated compound is chlorine and the catalyst contains 0.5% to 2% by weight of chlorine.

16. Process for preparing a catalyst comprising a platinum group metal M, at least one promoter X1 selected from the group consisting of tin, germanium and lead, a halogenated compound and a porous support, in which the X1/M atomic ratio is between 0.3 and 8, the $H_{ir}/M$ ratio measured by irreversible hydrogen chemisorption is greater than 0.40 and the bimetallicity index BMI measured by hydrogen/oxygen titration is greater than 108, said catalyst containing 0.1% to 15% by weight of halogenated compound, said process comprising the following steps:

a) introduction of the promoter X1 into the support or onto the support,
c) calcination of the product obtained in step a at a temperature preferably between 350°C and 650°C,
d) deposition of at least one platinum group metal M,
e) optional drying under an atmosphere that is neutral or contains oxygen, at a moderate temperature that preferably does not exceed 150°C,
f) deposition of a complementary fraction of the promoter X1 on the product obtained in step d or e, said complementary fraction of said promoter X1 being deposited by contacting of a tin tetrachloride or germanium tetrachloride solution,
h) calcination of the product obtained in step f), this calcination is preferably carried out in the presence of air and this air may also be enriched in oxygen or in nitrogen,
and in the case where the precursors of the promoter X1 or of the metal M that are used in the preparation of the catalyst do not contain halogen or contain an insufficient amount of halogen, addition of a halogenated compound during the preparation
or, when the halogen is chlorine, an oxychlorination treatment or impregnation with an aqueous hydrochloric acid solution.

17. Preparation process according to Claim 16, further comprising a step b) of drying of the product obtained on conclusion of step a.

18. Preparation process according to either of Claims 16 and 17, further comprising, before step h), a step g) of drying of the product obtained on conclusion of step f.

19. Preparation process according to one of Claims 16 to 18, in which a promoter X2 is introduced in one or more steps of the preparation selected from steps a), d), and f) .

20. Preparation process according to one of Claims 16 to 19, further comprising an additional step of introduction of a promoter X2 that takes place before step a), or between step c) and step d), or just before step f) or step h), or else after step h).

21. Preparation process according to one of Claims 16 to 20, in which at least 30% and at most 70% of the total amount of X1 included in the composition of the catalyst according to the invention is introduced during the second step f) of introduction of X1.

22. Process for the catalytic reforming of a hydrocarbon feedstock in the presence of the catalyst according to one of Claims 1 to 15.

**Figure 1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2814599 A
- US 4522935 A
- US 4964975 A
- US 6600082 B2
- US 6605566 B2
- FR 2840548
- FR 2091114
- EP 0183861 A
- US 6872300 B1
- US 6291394 B1

**Littérature non-brevet citée dans la description**

- **F.M. DAUTZENBERG et al.** Conversion of n-hexane over Monofunctional Catalysis Supported and Unsupported PtSn Catalysis. *Journal of Catalysys,* 1980, vol. 63, 119-128
- **AKOS FURCHT et al.** n-Octane reforming over modified catalysis I. The rôle of Sn, Te and Bi under industrial conditions. *Applied Catalysis A : General,* 2002, vol. 226, 155-161
- **G.J. ANTOS ; A.M. AITANI ; J.M. PARERA.** Catalytic Naphta Reforming, Science and Technology. Éditeur Marcel Decker, 1995
- **SHARMA et al.** *Applied Catalysis A,* 1998, vol. 168, 251